# EUROPEAN PATENT APPLICATION

(11) **EP 1 777 091 A1**
(43) Date of publication of application: **25.04.2007**
(21) Application number: 06022051.4
(22) Date of filing: 20.10.2006
(51) Int. Cl.: B60K 6/04, F16H 3/12

(54) **Transmission**

(30) Priority: 22.10.2005 GB 0521539
(71) Applicant: J.C. Bamford Excavators Ltd., Staffordshire, ST14 5JP (GB)
(72) Inventor: Evans, Simon James Peter, Oswestry, Shropshire, SY10 7LB (GB); Hoyle, David John, Cheshire, CW2 8EZ (GB)
(74) Representative: Lucking, David John

(57) **Abstract**

A transmission (18) includes a first input member (22) which in use is rotatably driven by a first prime mover (20), a second input member (24) which in use is rotatably driven by a second prime mover (26), a rotatable output member (56) from which drive is provided to a driven structure (12), the first input member (22) driving a driven member (38) and there being a drivable member (42) drivable by the second input member (24), the driven member (38) and the drivable member (42) being coupled though an intermediate structure (48) which carries the output member (56), drive being transmitted from the first input member (22) to the output member (56) when torque is input to the second input member (24) from the second prime mover (26), and wherein the second prime mover is an electrically driven switched reluctance motor.

## Description

### Description of Invention

This invention relates to a transmission and more particularly to a transmission known as an infinitely variable transmission ("IVT") in which the speed of an output shaft or other output member is infinitely variable irrespective of the speed of a, typically engine driven, input member. Such a transmission is typically used for off-road vehicles including tractors and working machines, such as excavating and/or loading machines.

In an IVT, drive is typically achieved by using a combination of mechanical and hydraulic components to provide a drive train in which, with the engine at a set speed, the output speed of the output shaft is dependent upon the input from a hydraulic motor, or variator. Hydraulic motors have been used because of their well established reliability and durability, which are important factors for a transmission for an off-road vehicle.

According to a first aspect of the invention we provide a transmission including a first input member which in use is rotatably driven by a first prime mover, a second input member which in use is rotatably driven by a second prime mover, a rotatable output member from which drive is provided to a driven structure, the first input member driving a driven member and there being a drivable member drivable by the second input member, the driven member and the drivable member being coupled though an intermediate structure which carries the output member, drive being transmitted from the first input member to the output member when torque is input to the second input member from the second prime mover, and wherein the second prime mover is an electrically driven switched reluctance motor.

By virtue of the second prime mover being an electrically driven switched reluctance motor, advantages over conventional hydraulic motor variators can be realised.

With known IVTs, with hydraulic motor variators, in order to provide adequate power over the whole range of off-road vehicle speeds, both when the vehicle is required to perform a work operation, as well as to enable the vehicle to be driven along a road at an adequate speed, it is necessary to provide selectable gears, which may be selectively engagable e.g. using clutches. This is because of the limitations in terms of speed and torque which can be achieved using a hydraulic motor as a variator. However a suitable electrical motor may provide for much greater variation of speed, and as a result, the number of selectable gears required to provide power over the whole vehicle speed operating range, may be at least reduced, or the requirement for selectable gears may be avoided altogether. Thus the output member may directly drive the driven structure without the intermediary of selectable gears.

Switched reluctance motors are relatively efficient, and are able to provide constant torque drive over a very large speed range, for example, up to 25000 rpm, and are mechanically relatively simple in construction. Even when driven at very low rotational speeds, switched reluctance motors provide full-rated torque, and these may be made in a variety of different geometrical configurations to suit different transmission packaging requirements.

Thus a switched reluctance motor, despite prejudices which have restricted development of IVTs primarily to the use of hydraulic motors and selectable gears, is an ideal secondary prime mover, or variator, for an IVT transmission.

In a preferred arrangement, electrical power for the electrically driven motor is provided from a generator which is driven by the first prime mover. For example, a rotor of the generator may coupled to or integral with, and be rotated with the first input member of the transmission which is driven by the first prime mover. The generator may be any kind of electrically generating machine, but preferably is a switched reluctance electrical generating machine.

The electrically driven switched reluctance second prime mover motor may be operated alternatively as a generator too, if desired, to produce electrical power e.g. for storage, when the first prime mover is being operated but the transmission is not transmitting drive to the output member. A large range of output member speeds, for forward and reverse drive, may be realised as the switched reluctance motor may readily be driven at high speeds and in either direction of rotation.

Various other advantages may be realised.

It will be appreciated that off-road vehicles, like on-road vehicles, require a source of electrical power, such as an alternator, to provide power for vehicle systems. With the transmission in accordance with the invention however, the generator which provides power for the electrically driven second prime mover may be used to provide power for vehicle systems, thus avoiding the need for any separate alternator.

Where the first prime mover is an engine, the off-road vehicle typically will have a starter motor, but with a transmission in accordance with the invention, initial drive to start the engine may be achieved through the transmission from the second prime mover, thus avoiding the need for a separate engine starter motor.

In one embodiment, the first and second input members may include drive shafts.

The driven member, driven from the first input member may include a sun gear which is rotatable about a main transmission axis, whilst the drivable member which may be driven by the second input member, may include a ring gear which is rotatable about the main transmission axis radially outwardly of the sun gear. The intermediate structure may provide at least one planet gear which meshes with each of the sun gear and the ring gear, the intermediate structure being rotatable about the main transmission axis and carrying the output member which is rotatable about the main transmission axis too, as the intermediate structure rotates.

The first input member may include a drive gear which meshes with a driven gear which is fast with a driven shaft of the transmission which carries the sun gear. The second input member may include a drivable gear which meshes with a driven gear which is rotatable relative to the driven shaft on which the sun gear is carried, the driven gear which meshes with the drivable gear being fast with the ring gear.

In such a construction, because drive may continuously be applied from the first prime mover, even though the output member should not rotate unless the second prime mover is actuated, due to innate resistances in the transmission, the vehicle may "creep" i.e. be driven very slowly, when vehicle movement is not required. Although a driver may halt such creep by the use of a brake, desirably an isolating clutch is provided which may selectively be disengaged to disengage drive from the first input member to the driven member, to prevent any unintentional creeping of the vehicle when drive is not required.

The transmission may be for a vehicle such as a tractor or working machine, which may be driven both on and off-road.

According to a second aspect of the present invention we provide a vehicle which includes a ground engaging structure though which drive may be transmitted from a prime mover to the ground to move the vehicle over the ground, and wherein a transmission is provided, the transmission being in accordance with the first aspect of the invention.

The transmission may include a drive splitting assembly for transmitting drive from the output member of the transmission to each of first and second pairs of ground engaging driving wheels or track driving wheels as required. The drive splitting assembly may include a shaft carrying a gear which meshes with and is driven from an output gear of the output member of the transmission.

Embodiments of the invention will now be described with the aid of the accompanying drawings in which:-
FIGURE 1 is a diagrammatic illustration of a tractor which may embody the invention;
FIGURE 2 is an illustrative sectional view of a transmission in accordance with the present invention.

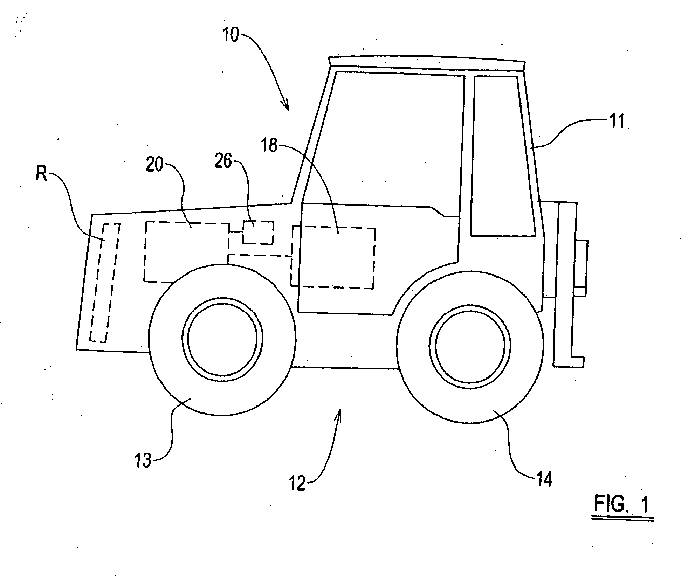

Referring to figure 1, an off-road vehicle 10, namely a tractor in this example, includes a body 11 and a driven ground engaging structure 12 including a two pairs of ground engaging wheels, namely a pair of front drive wheels 13 and a pair of rear drive wheels 14. All of the wheels 13, 14 are drivable by a transmission 18 to which drive power is primarily provided by a first prime mover being in this example, an internal combustion engine 20.

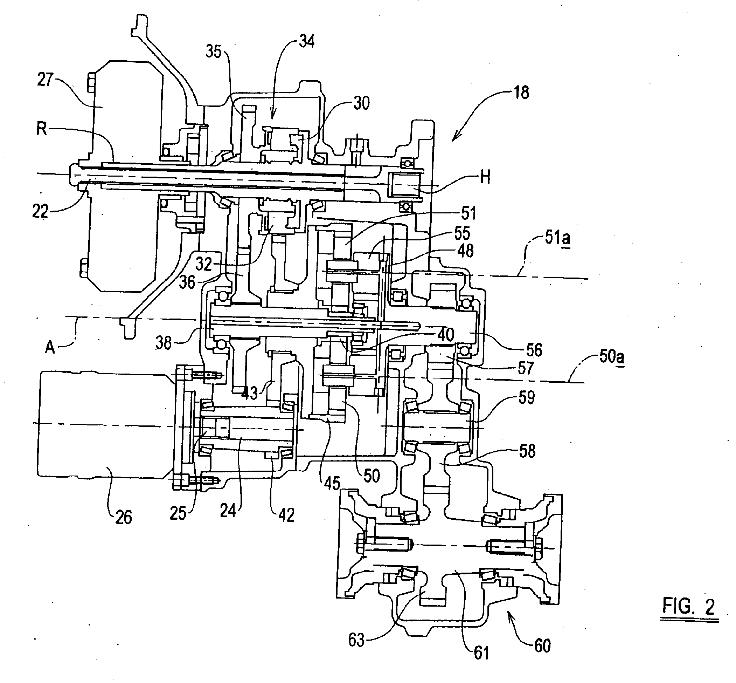

Referring also to figure 2, the transmission 18 includes a first input member 22 which includes a drive shaft, which is coupled to the engine 20, and a second input member 24 which also includes a drive shaft, and is connected to or integral with a rotor shaft 25 of a second prime mover 26 which is an electrically driven motor, and more particularly, is a switched reluctance motor.

The drive shaft of the first input member 22 carries a rotor R of an electrical power generating machine 27 which in this example is a switched reluctance generating machine. The drive shaft of the first input member 22 also carries a rotatable clutch member 30 which rotates with the drive shaft of the first input member 22, and when clutch plates 32 of an isolating clutch 34 are moved into engagement with the clutch member 30, a drive gear 35 is constrained to rotate with the drive shaft of the first input member 22. The drive gear 35 meshes with a driven gear 36 which is fast with a driven shaft 38 which is centred on a main transmission axis A of the transmission 18. Thus when the isolating clutch 34 is engaged, and when the engine 20 is operating, the driven shaft 38 rotates with the first input member 22.

The driven shaft 38 carries and is fast with a sun gear 40, which in this example is splined or otherwise non rotatably fixed to the driven shaft 38.

The second input member 24 includes a drivable gear 42 which meshes with a driven gear 43 which is rotatable about the main transmission axis A, relative to the driven shaft 38. The driven gear 43 which meshes with the drivable gear 42 is fast with a drivable member 45 which in the present example is a ring gear 45. The ring gear 45 thus is rotatable about the main transmission axis A radially outwardly of the sun gear 40.

An intermediate structure 48 is provided between the ring gear 45 and the sun gear 40, and includes at least one, but preferably a plurality of, e.g. at least three, planet gears 50, 51. In figure 2, two planet gears 50, 51 are seen in cross-section, each of which is rotatable about its own respective axis 50a, 51 a relative to a carrier 55 of the intermediate structure 48. The carrier 55 and planet gears 50, 51 of the intermediate structure 48 are all rotatable about the main transmission axis A as hereinafter described, to rotate a rotatable transmission output member 56 which is coupled to the driven structure i.e. the ground engaging structure 12 of the vehicle 10 to drive the drive wheels 13, 14.

To enable drive to be transmitted to both the front pair 13 and rear pair 14 of the drive wheels, the output member 56 includes an output gear 57 which drives an intermediate gear 58 carried on a lay shaft 59 of a drive splitting assembly 60. The intermediate gear 58 in turn drives a final shaft 61 with an integral final drive gear 63 which meshes with the intermediate gear 58. The final shaft 61 of the drive splitting assembly 60 is coupled e.g. via a differential, to each of the front and rear pairs of drive wheels 13, 14.

Use of the transmission 18 is as follows.

With the engine 20 speed set, power is provided to the first input member 22 and the generator 27 generates electrical power. The set speed may be a constant engine speed, although an engine controller may adjust the engine speed to provide optimum performance, minimal emissions, or fuel economy depending on what is required, according to sensed conditions such as load.

Where the isolating clutch 34 is engaged but the switched reluctance motor 26 is inoperative, the driven shaft 38 will be rotated, and the sun gear 40 will rotate about the main transmission axis A thereby causing the planet gears 50, 51 to rotate about their respective axes 50a and 51 a. Thus the ring gear 45 will rotate but the carrier 55 of the intermediate structure 48 will remain stationary. Thus drive is not transmitted to the output member 56, and the vehicle 10 remains stationary.

Because the ring gear 45 meshes with the planet gears 50, 51, their rotation will rotate the ring gear 45 and in turn the drivable gear 42 and second input member 24 will be rotated transmitting drive to the rotor shaft 25 of the switched reluctance motor 26 which will idle.

However, upon the switched reluctance motor 26 being actuated, such that drive or resistance to drive is transmitted to the ring gear 45, the carrier 55 of the intermediate structure 48, and hence the output member 56 will be constrained to rotate about the main transmission axis A, thus transmitting drive from the engine 11 to the driven ground engaging structure 12.

For a particular first input member 22 speed, the speed and direction of rotation of the intermediate structure 48 and hence output member 56 will depend entirely upon the speed and direction of rotation of the second input member 24, which by virtue of the second prime mover 26 being a switched reluctance motor, may readily be varied between zero speed and very high rotational speed, and in either direction of rotation, whilst providing full or at least near full-rated torque over the whole of its speed operating range. If the engine speed, i.e. speed of the first input member 22 is adjusted by an engine controller to optimise performance and/or reduce emissions and/or improve economy, for conditions experienced, the second prime mover 26 speed may readily be adjusted to maintain a constant output member 56 speed.

Electrical power for the switched reluctance motor 26 may be provided by the generator 27 which is driven by the first prime mover 20.

Switched reluctance motors have particular requirements and in particular a source of cooling. Cooling may be provided by cooling fluid which passes through a cooler of the vehicle 10, such as an engine radiator R, or otherwise.

The physical configuration of the switched reluctance motor 26 need not be as shown, but may be varied to a wide degree e.g. to provide a shorter fatter or thinner longer motor 26 as required, to suit different packaging requirements for different vehicles 10.

Switched reluctance motors require an electronic controller, which may be situated close to the motor 26, or remote therefrom as is suitable.

Various modifications may be made without departing from the scope of the invention.

Although the transmission 18 has been described for use in a vehicle which is a tractor 10, the transmission is suitable for use for other kinds of vehicles including working machines such as excavators and/or loaders, any of which may be operated off-road, and which may be driven on-road. In each case, such a vehicle will have services powered by pumped hydraulic fluid. If desired, a hydraulic pump may be driven from the first input member 22, at a position at the end of the drive shaft of the first input member 22, remote from the engine 20, and as indicated at H in the drawing.

Because wide variation of output member 56 speed and in forward or reverse, can be achieved using a switched reluctance motor 26 as a variator, it will be appreciated that there is no need to provide selectable gears to change gear ranges to suit different required drive speeds. Thus the driven ground engaging structure 12 may be driven directly from the output member 56 by which we mean without any intermediate selectable gears, whilst high on-road speeds may be achieved, as well as lower off-road speeds, with full engine torque being available throughout the entire speed range.

In an alternative transmission arrangement, drive from the first input member 22 may be transmitted to the sun gear 40 otherwise than as described. Moreover drive may be transmitted from the second input member 24 to the ring gear 45 may be achieved otherwise than as described.

If desired, instead of an intermediate structure 56 with planet gears 50, 51, some other gearing arrangement may be provided, in which input from the second prime mover is required for drive to be transmitted from the first prime mover to the output member of the transmission.

If desired, when the engine 20 is operative but drive is not required, the idling switched reluctance motor 26 may be used as an electrical generator to generate electrical power for storage in a vehicle battery and/or for use in powering other vehicle systems.

If desired, during engine 20 start up, the isolating clutch 34 may be engaged and the switched reluctance motor 26 actuated to transmit drive to the first input member 22, so that the vehicle 10 requires no starter motor.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A transmission (18) including a first input member (22) which in use is rotatably driven by a first prime mover (20), a second input member (24) which in use is rotatably driven by a second prime mover (26), a rotatable output member (56) from which drive is provided to a driven structure (12), the first input member (22) driving a driven member (38) and there being a drivable member (42) drivable by the second input member (24), the driven member (38) and the drivable member (42) being coupled though an intermediate structure (48) which carries the output member (56), drive being transmitted from the first input member (22) to the output member (56) when torque is input to the second input member (24) from the second prime mover (26), and wherein the second prime mover (26) is an electrically driven switched reluctance motor.

2. A transmission according to claim 1 **characterised in that** the output member (56) directly drives the driven structure (12) with no intermediate selectable gears.

3. A transmission according to any one of the preceding claims **characterised in that** electrical power for the electrically driven motor (26) is provided from a generator (27) which is driven by the first prime mover (20).

4. A transmission according to claim 3 **characterised in that** a rotor (R) of the generator (27) is coupled to and is rotated with the first input member (22) of the transmission (18) which is driven by the first prime mover (20).

5. A transmission according to claim 3 or claim 4 **characterised in that** the generator (27) is a switched reluctance electrical generating machine.

6. A transmission according to any one of the preceding claims **characterised in that** the second prime mover (26) is operable as a generator to produce electrical power when the first prime mover (20) is being operated but the transmission (18) is not transmitting drive.

7. A transmission according to any one of the preceding claims **characterised in that** the first (22) and second (24) input members include drive shafts.

8. A transmission according to any one of the preceding claims **characterised in that** the driven member (38), driven from the first input member (22) includes a sun gear (40) which is rotatable about a main transmission axis (A), and the drivable member (42) which is drivable by the second input member (24), includes a ring gear (45) which is rotatable about the main transmission axis (A) radially outwardly of the sun gear (40), the intermediate structure (48) providing at least one planet gear (50, 51) which meshes with each of the sun gear (40) and the ring gear (45), the intermediate structure (48) being rotatable about the main transmission axis (A) and carrying the output member (56) which is rotatable about the main transmission axis (A), as the intermediate structure (48) rotates.

9. A transmission according to claim 8 **characterised in that** the first input member (22) includes a drive gear (35) which meshes with a driven gear (36) which is fast with a driven shaft (38) of the transmission (18) which carries the sun gear (40).

10. A transmission according to claim 9 **characterised in that** the second input member (24) includes a drivable gear (42) which meshes with a driven gear (43) which is rotatable relative to the driven shaft (38) on which the sun gear (40) is carried, the driven gear (43) which meshes with the drivable gear (42) being fast with the ring gear (45).

11. A transmission according to any one of claims 8 to 10 **characterised in that** an isolating clutch (34) is provided which is selectively disengageable to disengage drive from the first input member (22) to the driven member (38).

12. A transmission according to any one of the preceding claims in which the transmission is for a vehicle (10) or working machine which is drivable both on and off-road.

13. A vehicle (10) which includes a driven ground engaging structure (12) though which in use drive is transmitted from a prime mover (20) to the ground to move the vehicle (10) over the ground, and **characterised in that** a transmission (18) is provided, the transmission (18) being in accordance with any one of the preceding claims.

14. A vehicle according to claim 13 **characterised in that** the transmission (18) includes a drive splitting assembly (60) for transmitting drive from the output member (56) of the transmission (18) to each of first (13) and second (14) pairs driving wheels (15).

15. A vehicle according to claim 14 **characterised in that** the drive splitting assembly (60) includes a shaft (61) carrying a gear (63) which meshes with and is driven from an output gear (57) of the output member (56) of the transmission (18).

16. A vehicle according to claim 13 or claim 14 or claim 15 **characterised in that** electrical power for the electrically driven motor (26) is provided from a generator (27) which is driven by the first prime mover (20), the generator (27) providing electrical power for vehicle systems.

17. A vehicle according to any one of claims 13 to 16 **characterised in that** the first prime mover (20) is an engine, initial drive to start the engine being achievable through the transmission (18) from the second prime mover (26).
